# FASCICULE DE BREVET EUROPEEN

(11) **EP 2 771 979 B1**
(45) Date de publication et mention de la délivrance du brevet: **10.08.2016**
(21) Numéro de dépôt: 12819076.6
(22) Date de dépôt: 29.10.2012
(51) Int. Cl.: H04B 7/04, H04B 7/06

(54) **PROCÉDÉ DE TRANSMISSION DE TRAMES, STATIONS ET PROGRAMME D'ORDINATEUR CORRESPONDANTS**
VERFAHREN ZUR RAHMENÜBETRAGUNG, STATIONEN UND COMPUTERPROGRAMM DAFÜR
METHOD OF TRANSMITTING FRAMES, STATIONS AND COMPUTER PROGRAM CORRESPONDING THERETO

(30) Priorité: 28.10.2011 FR 1159834
(43) Date de publication de la demande: 03.09.2014
(73) Titulaire: Orange, 75015 Paris (FR)
(72) Inventeur: CARIOU, Laurent, F-35000 Rennes (FR); CHARAF, Akl, F-35510 Cesson Sevigne (FR)
(86) Numéro de dépôt international: PCT/FR2012/052487
(87) Numéro de publication internationale: WO 2013/061009

(56) Documents cités:
- WO-A1-2010/117816
- US-A1- 2008 130 790
- US-A1- 2009 323 773
- US-A1- 2011 134 859

## Description

### Domaine de l'invention

La présente invention se rapporte au domaine des télécommunications. Au sein de ce domaine, l'invention se rapporte plus particulièrement au domaine des communications numériques par voie radio, également appelées sans fil, qui inclue les réseaux WiFi (Wireless Fidelity selon la terminologie anglo saxonne) dont la standardisation fait l'objet des normes 802.11 et suivantes de l'IEEE, qui nécessitent une connaissance du canal à l'émission. Ces normes garantissent une interopérabilité entre des équipements de communication sans fil conformes à ces normes.

Plus précisément, l'invention concerne l'émission et la réception de trames entre équipements WiFi permettant à l'émetteur de tenir compte du canal de transmission grâce à une information remontée dans un message de retour issu du récepteur (selon la terminologie anglo saxonne « feedback message »).

On entend ici par équipement un appareil appartenant à un ensemble de services de base (selon la terminologie anglo saxonne BSS pour « basic service set ») formé par un point d'accès et les stations associées à ce point d'accès, c'est-à-dire les stations situées dans la zone de couverture de ce point d'accès.

L'invention trouve notamment une application dans des systèmes de transmission de type MU-MIMO, c'est-à-dire multi utilisateurs MIMO mettant en oeuvre une technique d'accès SDMA (acronyme des termes anglo-saxons « spatial division multiple access »), c'est-à-dire d'accès multiple à répartition spatiale, avec une formation de faisceaux (selon la terminologie anglo-saxonne « beamforming »). Dans le domaine MU-MIMO, le terme utilisateur est souvent utilisé en lieu et place de la station à laquelle il est associé.

### Art antérieur

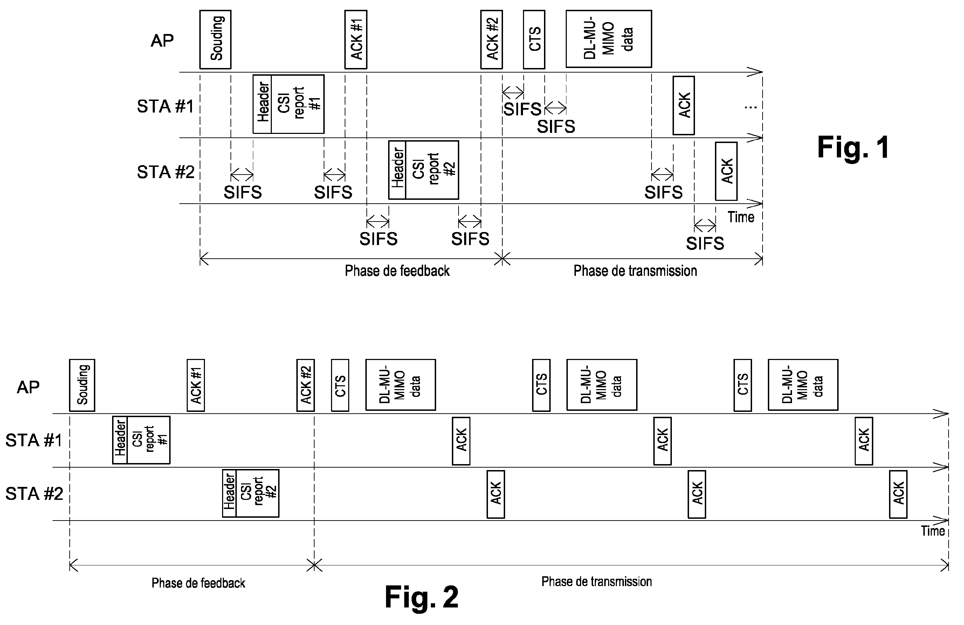

Les techniques de transmission MU-MIMO nécessitant une connaissance du canal de transmission à l'émission comprennent deux phases : une phase F de récupération d'information sur le canal (selon la terminologie anglo saxonne « feedback »), sans transmission de données utiles, et une phase T de transmission de données utiles, comme illustré en figure 1 pour une technique SDMA dans un contexte à trois équipements. L'exemple illustré comporte une phase de transmission composée d'un élément de base, c'est-à-dire un paquet de transmission de données utiles encapsulé dans une trame suivi d'acquittements de réception de ces données utiles émis par les utilisateurs.

La phase de transmission T peut comporter plusieurs éléments de base successifs tant que le canal n'a pas évolué. La figure 2 illustre une phase de transmission comportant trois éléments de base émis successivement.

Pendant la phase F de « feedback », l'émetteur, par exemple un point d'accès AP, envoie un paquet comprenant des pilotes, appelé paquet de sondage « sounding », vers les stations (STA#1, STA#2). Ces paquets permettent aux stations d'estimer le canal descendant DL (« DownLink » selon la terminologie anglo saxonne). Ces stations encodent ensuite l'estimation du canal, notée *CSI_DL,* et la transmettent vers le point d'accès AP, dans une trame notée *"CSI report".* Ce mécanisme qui permet de disposer d'une estimation du canal à l'émission est parfois appelé « retour explicite » (« explicit feedback » selon la terminologie anglo saxonne).

L'évolution temporelle du canal détermine la durée de la phase de transmission. Ainsi, si le canal varie suffisamment pendant F+nTe ms pour que la technique SDMA ne fonctionne plus, par exemple parce que l'interférence entre utilisateurs devient trop forte, alors la durée de la phase de transmission doit être inférieure à nTe ms. A la fin de cette phase de transmission T, une nouvelle phase de « feedback » est mise en oeuvre, afin d'obtenir une estimation à jour du canal de transmission.

Pour exemple, la technique de « beamforming » selon la norme 802.11n qui permet de focaliser la puissance d'émission vers un récepteur particulier et ainsi d'augmenter le rapport signal à bruit en réception, met en oeuvre une phase de feedback toutes les 100ms dans un contexte de déploiement correspondant à un espace ouvert (ou « open-space » selon la terminologie anglo saxonne) sans déplacement des émetteurs/récepteurs. Cette durée de mise en oeuvre de la phase de feedback est réduite à 25ms, dans le même environnement, avec la technique SDMA multi utilisateurs.

Il s'avère que plus la phase de transmission T des données utiles est longue, plus le débit total de transmission est élevé. Cependant, comme indiqué ci-dessus, la longueur de la phase de transmission est limitée par les variations temporelles du canal dues aux déplacements de l'émetteur ou du récepteur ou dues à des modifications de l'environnement.

Pendant la phase de transmission, le point d'accès AP émet un ou plusieurs paquets de données utiles *"DL-MU-MIMO"* vers plusieurs utilisateurs. L'émission simultanée est classiquement effectuée en formant des faisceaux pointant respectivement vers les différents utilisateurs grâce à une technique de pré codage des données qui exploite la réponse du canal de propagation de chaque utilisateur. La technique de pré codage la plus connue est la technique dite ZF (abréviation des termes anglo saxons « Zero forcing ») comme rappelé dans l'article [1]. Le pré codage ZF consiste à pondérer les données des utilisateurs avec respectivement des vecteurs de pré codage déterminés à partir de l'estimation du canal dans le but d'obtenir une annulation de l'interférence causée par un utilisateur au niveau des récepteurs des autres utilisateurs.

Toutefois, la mise en oeuvre de ces techniques ne permet pas toujours d'atteindre une annulation parfaite du fait notamment d'adaptations nécessaires lors de l'implémentation. Ainsi, pour réduire la surcharge de signalisation occasionnée par les retours explicites « feedback », parfois seuls les meilleurs modes font l'objet du retour. Après estimation du canal, le canal MIMO est décomposé en valeurs singulières et vecteurs propres. Pour un canal MIMO 4x4, il existe quatre valeurs singulières et quatre vecteurs propres correspondants. Chaque valeur singulière et son vecteur propre associé représente ce qu'on appelle un mode propre du canal, su lequel un flux de données peut être transmis. Les modes propres sont orthogonaux entre eux et n'interfèrent donc pas entre eux. Dans le cas optimal, il est donc possible d'avoir quatre modes propres et de transmettre quatre flux spatiaux parallèles. Mais en général, certains modes propres ont une valeur singulière nulle, ce qui signifie qu'il est impossible de transmettre un flux sur ces modes. Dans ces cas, seuls les modes les plus forts font l'objet d'un retour par « feedback » car ce sont les seuls sur lesquels il est possible de transmettre de l'information. Dans ces cas, le point d'accès n'obtient qu'une information partielle du canal et par conséquent l'annulation d'interférence inter utilisateurs ne peut pas être complète.

En outre, dans certaines conditions dites de mobilité, c'est-à-dire lorsque les équipements se déplacent les uns par rapport aux autres, il peut y avoir une différence entre les caractéristiques du canal telles que remontées lors de la phase de « feedback » et les caractéristiques du canal lors de la phase de transmission qui suit. Cette différence peut entraîner une augmentation de l'interférence inter utilisateurs à la réception.

Des travaux récents développés en particulier autour du groupe de standardisation IEEE802.11ac, ont pour objet des techniques de réduction de cette interférence.

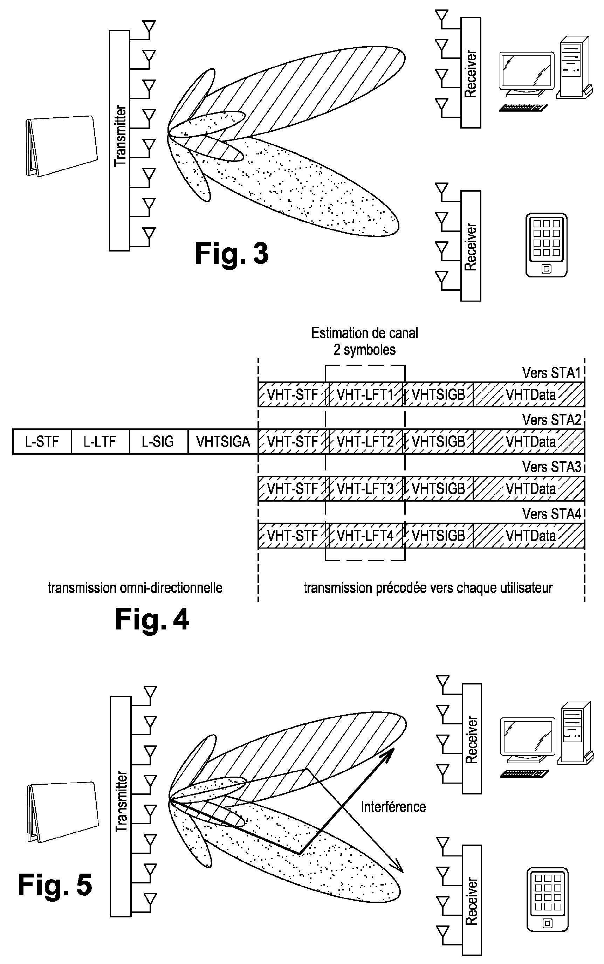

Ainsi, dans le cas de la technique SDMA par exemple, un point d'accès AP possédant quatre antennes peut transmettre simultanément sur la même bande de fréquence vers quatre utilisateurs, en formant un faisceau vers chaque utilisateur afin de supprimer l'interférence entre utilisateurs, comme illustré par la figure 3. Ces faisceaux sont calculés à partir de l'information du canal de chaque utilisateur.

Dans le cas idéal, chaque utilisateur ne reçoit que l'information qui lui est destinée, c'est-à-dire un flux spatial parmi les quatre flux spatiaux envoyés par le point d'accès.

Selon un premier mode, le point d'accès n'envoie vers chaque utilisateur que les symboles pilote nécessaires pour l'estimation du canal associé au flux spatial qui lui est destiné. Selon ce mode, en référence à la figure 4, le point d'accès émet un paquet de sondage « sounding » selon une transmission omnidirectionnelle pour les premiers champs L-STF, L-LTF, L-SIG et VHTSIGA puis selon une transmission directionnelle pour les champs suivants, c'est-à-dire avec pré codage, en particulier pour les champs VHT-LTFi contenant les pilotes. Le paquet de sondage est encapsulé dans une trame qui comprend les quatre premiers champs (L-STF, L-LTF, L-SIG, VHTSIGA) et les quatre champs suivants (VHT-STF, VHT-LTF1, VHTSIGB, VHTData) après pré-codage et puis addition.

Toutefois, compte tenu en particulier de l'évolution temporelle du canal la réalité s'écarte du cas idéal et un utilisateur peut recevoir l'information qui lui est destinée interférée par l'information destinée aux autres utilisateurs, comme illustré par la figure 5. Si un utilisateur possède plus d'antennes de réception que de flux spatiaux qui lui sont destinés, il lui est possible de supprimer tout ou une partie de l'interférence par des techniques connues d'annulation d'interférence (comme la technique « EQMM » pour « Erreur Quadratique Moyenne Minimale » ou « MMSE » pour « Minimum Mean Square Error » en anglais). Ceci n'est cependant possible que si cet utilisateur est capable d'estimer le canal pour les flux spatiaux à destination des autres utilisateurs.

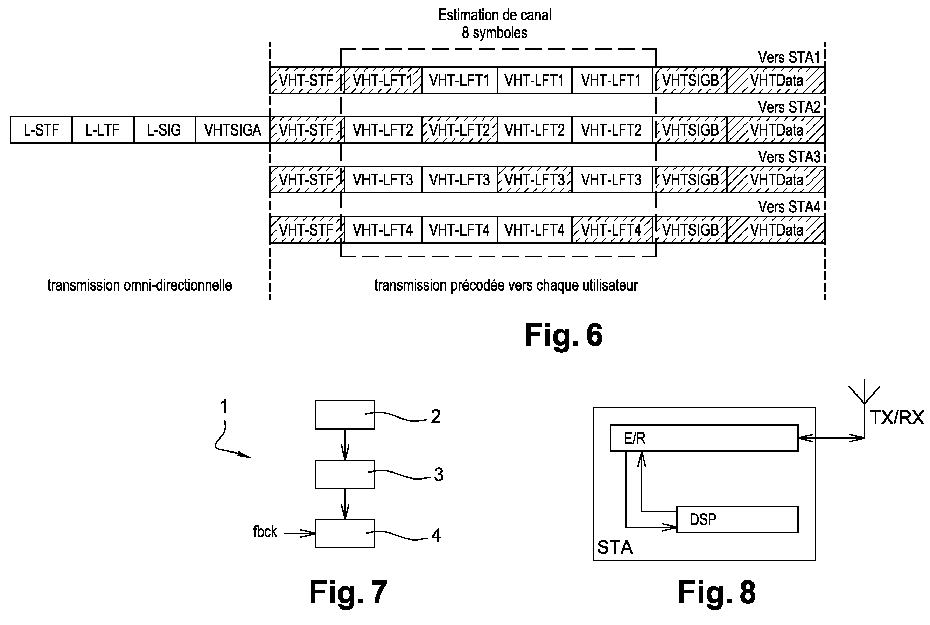

Selon un deuxième mode, le point d'accès transmet vers chaque utilisateur non seulement les symboles pilote lui permettant d'estimer le canal pour le flux spatial qui lui est destiné mais en outre les symboles pilote lui permettant d'estimer le canal pour les flux spatiaux destinés aux autres utilisateurs, comme illustré par la figure 6, pour pouvoir supprimer tout ou une partie de l'interférence inter utilisateurs.

Selon ce mode, le point d'accès émet successivement des symboles pilotes destinés aux différents utilisateurs. Les symboles pilote destinés aux utilisateurs sont donc positionnés à des instants successifs dans des paquets destinés respectivement aux différents utilisateurs. Soit les symboles pilotes destinés à un utilisateur sont émis seuls, soit ils sont multiplexés avec des symboles pilotes destinés aux autres utilisateurs mais de manière que les liens soient orthogonaux entre eux, c'est-à-dire de façon que les liens entre l'émetteur et les différents utilisateurs soient orthogonaux. L'orthogonalité des liens est obtenue en pré codant les pilotes avec les vecteurs de pré codage des utilisateurs.

A la réception, chaque utilisateur estime le canal suivi par le signal direct ainsi que le canal suivi par les interférences en exploitant les différents symboles pilote. Les estimations des différents canaux sont remontées par chaque utilisateur au point d'accès. La demande de brevet WO2010117816 A1 décrit en détail une construction des vecteurs de pré codage SDMA basée sur les retours, « feedback », des coefficients du canal remontés par les différentes stations.

Ce deuxième mode permet d'être plus robuste à des variations du canal dans le temps parce qu'il permet d'annuler l'interférence générée. Mais il nécessite une transmission d'un plus grand nombre de symboles pilotes vers chaque utilisateur, ce qui réduit l'efficacité de la couche physique du système de transmission.

En tout état de cause, quelle que soit la technique de transmission, une nouvelle phase de « feedback » doit être mise en oeuvre dès que l'interférence devient trop importante.

### Exposé de l'invention

L'invention propose une amélioration aux techniques connues de lutte contre l'interférence, sous la forme d'un procédé de transmission de trames destiné à être mis en oeuvre par un système MIMO multi utilisateurs comprenant un émetteur avec plusieurs antennes et des récepteurs associés respectivement aux utilisateurs.

Ainsi, l'invention a pour objet un procédé de transmission de trames destiné à être mis en oeuvre par un système MIMO multi utilisateurs comprenant un émetteur avec plusieurs antennes et des récepteurs associés respectivement aux utilisateurs, caractérisé en ce qu'il comprend :
- une étape de construction d'une trame de sondage dont une première partie comprend au moins un symbole destiné à la synchronisation de récepteurs destinataires et une deuxième partie comprend au moins autant de symboles pilote pré codés que de récepteurs destinataires,
- une étape d'émission de la trame de sondage selon un mode de diffusion pour la première partie et selon un mode directionnel pour la seconde partie à destination des récepteurs destinataires,
- une étape de construction d'une trame de données à destination des récepteurs destinataires, l'étape de construction de la trame de données prenant en compte une information de retour venant des récepteurs destinataires codant pour un récepteur destinataire une interférence inter récepteurs destinataires.

Ainsi selon l'invention, les transmissions MU-MIMO sont améliorées en permettant à l'émetteur d'adapter sa construction de trames pour diminuer l'impact des interférences inter utilisateurs au niveau des récepteurs destinataires.

Compte tenu de la réception par un récepteur destinataire de trames de sondage, le récepteur destinataire estime par des techniques d'estimation classiques au moyen des différents pilotes pré codés son canal de transmission ainsi que les canaux de transmission suivis par les signaux interférant correspondant aux pilotes pré codés avec les vecteurs des autres récepteurs.

A partir de sa connaissance des canaux de transmission, un récepteur destinataire calcule la puissance des interférences dues aux symboles destinés aux autres récepteurs destinataires. Ce calcul est par exemple basé sur une moyenne de la norme des estimés des canaux sur l'ensemble des sous porteuses des signaux émis (typiquement OFDM) et sur l'ensemble des flux spatiaux.

Ainsi, un récepteur destinataire qui subit des interférences dues à des symboles pré codés destinés à d'autres récepteurs destinataires, interférence qualifiée d'inter utilisateurs ou inter récepteurs, a les moyens de mesurer le niveau d'interférence et de déterminer quels sont les récepteurs destinataires associés aux symboles qui interfèrent la réception des symboles qui lui sont destinés.

L'émetteur reçoit ainsi des différents récepteurs destinataires les informations concernant les interférences inter utilisateurs subies par les différents récepteurs destinataires. L'émetteur peut alors construire la trame de données selon une répartition des données entre récepteurs destinataires qui tienne compte des interférences inter utilisateurs.

Selon un mode de réalisation de l'invention, pour un récepteur destinataire donné, l'information de retour code uniquement un identifiant du récepteur destinataire interférant générant l'interférence inter récepteurs destinataires la plus élevée parmi les différentes interférences inter récepteurs destinataires reçues par le récepteur destinataire donné.

Selon ce mode, le récepteur destinataire détermine si un autre récepteur destinataire joue un rôle prépondérant dans les interférences subies. Les utilisateurs destinataires d'une transmission MU-MIMO font partie d'un groupe d'utilisateurs. Ce groupe possède un identifiant et chaque utilisateur dans ce groupe possède un numéro, qui référence les codes d'estimation de canal ainsi que les flux MIMO utilisés (« spatial streams »). Lors d'une transmission MU-MIMO, l'entête transporte l'information de l'identifiant du groupe. Un utilisateur est alors capable de savoir de quel autre utilisateur (numéro de cet utilisateur dans ce groupe) provient l'interférence. Il peut donc signaler que l'interférence provient de l'utilisateur portant le numéro x dans le groupe x. Le récepteur destinataire peut donc connaître l'identifiant de cet autre récepteur destinataire et le coder dans l'information de retour. L'émetteur dispose alors de l'identifiant du récepteur destinataire qui interfère de manière prépondérante la réception d'un autre récepteur destinataire.

Selon un mode de réalisation de l'invention, les données d'un premier et d'un deuxième récepteurs destinataires sont réparties dans des trames de données différentes si l'interférence subie par l'un des récepteurs destinataires due à l'autre récepteur destinataire dépasse un seuil donné.

Si l'interférence subie par l'un des récepteurs destinataires due à un autre récepteur destinataire dépasse un seuil donné et/ou dépasse les interférences causées par les autres récepteurs destinataires, l'émetteur peut répartir les données des deux récepteurs destinataires dans des trames de données différentes. Ces trames sont typiquement émises de manière successive dans le temps. Ainsi, le premier récepteur destinataire n'est plus perturbé par les symboles destinés au deuxième récepteur destinataire, le niveau d'interférence est donc très nettement diminué par la suppression de la source prépondérante d'interférences.

Selon un mode de réalisation de l'invention, une interférence inter récepteurs destinataires qui dépasse un seuil donné déclenche une étape d'émission d'une trame de sondage.

De manière alternative, l'émetteur peut déclencher l'émission d'une trame de sondage. Les niveaux d'interférence calculés par les récepteurs destinataires prennent en compte leur connaissance des canaux de transmission. Si ces canaux de transmission ont évolués depuis leur dernière estimation, les niveaux d'interférence calculés peuvent ne pas refléter correctement la réalité. Ainsi, la trame de sondage permet aux récepteurs destinataires de mettre à jour leur connaissance des canaux de transmission.

Selon un mode de réalisation de l'invention, l'information de retour est extraite d'une trame d'acquittement de données provenant d'un récepteur destinataire des données.

Ce mode a pour avantage d'être compatible de nombreux équipements WiFi déjà existants.

Selon un mode de réalisation de l'invention, l'information de retour est extraite d'un champ qui code avec les mêmes bits un mode de modulation et de codage du récepteur destinataire.

Ce mode a pour avantage d'être compatible des dernières évolutions des standards WiFi. Selon un mode de réalisation de l'invention, les symboles pilote pré codés sont répartis successivement dans la deuxième partie de la trame.

Selon ce mode, un récepteur destinataire peut estimer aisément le canal de transmission pour les données qui lui sont destinées et les canaux de transmission pour les données qui ne lui sont pas destinée.

L'invention a en outre pour objet un équipement WiFi avec plusieurs antennes destiné à un système MiMO multi utilisateurs comprenant l'équipement et des récepteurs associés respectivement aux utilisateurs. Un équipement WiFi selon l'invention comprend :
- un moyen pour construire une trame de sondage dont une première partie comprend au moins un symbole destiné à la synchronisation de récepteurs destinataires et une deuxième partie comprend au moins autant de symboles pilote pré codés que de récepteurs destinataires,
- un moyen pour construire une trame de données à destination des récepteurs destinataires, les moyens de construction de la trame de données prenant en compte une information de retour venant des récepteurs destinataires codant pour un récepteur destinataire une interférence inter récepteurs destinataires,
- des moyens d'émission/réception pour émettre et recevoir via un canal de transmission des trames, adaptés pour émettre la trame de sondage selon un mode de diffusion pour la première partie et selon un mode directionnel pour la seconde partie à destination des récepteurs destinataires.

Un tel équipement WiFi est notamment adapté à mettre en oeuvre le procédé de transmission décrit précédemment. Il s'agit par exemple d'un point d'accès ou d'une station Wifi.

Selon une implémentation préférée, les étapes du procédé de transmission de trames selon l'invention sont déterminées par les instructions d'un programme sous forme d'un ou plusieurs modules incorporés respectivement dans des circuits électroniques telles des puces elles-mêmes pouvant être disposées dans un dispositif électronique tel une station ou un point d'accès WiFi. Le procédé de transmission de trames, selon l'invention peut tout aussi bien être mis en oeuvre lorsque ce programme (ou ses modules) est chargé dans un organe de calcul tel un processeur ou équivalent dont le fonctionnement est alors commandé par l'exécution du programme.

En conséquence, l'invention s'applique également à un programme d'ordinateur (ou ses différents modules), notamment un programme d'ordinateur sur ou dans un support d'informations, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter un procédé selon l'invention.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur, une clé USB.

Alternativement, le support d'informations peut être un circuit intégré dans lequel le programme est incorporé, le circuit étant adapté pour exécuter ou pour être utilisé dans l'exécution du procédé en question.

D'autre part, le programme peut être traduit en une forme transmissible telle qu'un signal électrique ou optique, qui peut être acheminé via un câble électrique ou optique, par radio ou par d'autres moyens. Le programme selon l'invention peut être en particulier téléchargé sur un réseau de type Internet.

Donc, l'invention a en outre pour objet un programme d'ordinateur comportant des instructions de programme adaptées à la mise en oeuvre d'un procédé de transmission de trames selon un objet de l'invention mis en oeuvre par un équipement WiFi destiné à un système MiMO multi utilisateurs comprenant l'équipement et des récepteurs associés respectivement aux utilisateurs, lorsque ledit programme est chargé et exécuté dans l'équipement WiFi destiné à mettre en oeuvre le procédé de transmission.

Et l'invention a en outre pour objet un support d'informations comportant des instructions de programme adaptées à la mise en oeuvre d'un procédé de transmission de trames selon un objet de l'invention mis en oeuvre par un équipement WiFi destiné à un système MiMO multi utilisateurs comprenant l'équipement et des récepteurs associés respectivement aux utilisateurs, lorsque ledit programme est chargé et exécuté dans l'équipement WiFi destiné à mettre en oeuvre le procédé de transmission.

### Liste des figures

D'autres caractéristiques et avantages de l'invention apparaîtront plus clairement à la lecture de la description suivante de modes de réalisation particuliers, donnés à titre de simples exemples illustratifs et non limitatifs, et des dessins annexés, parmi lesquels :
- la figure 1, citée en relation avec l'art antérieur, est un schéma illustrant la phase F de récupération d'information sur le canal (selon la terminologie anglo-saxonne « feedback ») sans transmission de données utiles et la phase T de transmission de données utiles, pour une technique de transmission SDMA dans un contexte à trois équipements,
- la figure 2, citée en relation avec l'art antérieur, est un schéma illustrant une phase F de récupération d'information sur le canal suivie d'une phase de transmission comportant trois éléments de base émis successivement, pour une technique de transmission SDMA dans un contexte à trois équipements,
- la figure 3, citée en relation avec l'art antérieur, dans un contexte de transmission SDMA, est un schéma illustrant un point d'accès AP possédant quatre antennes qui transmet simultanément sur la même bande de fréquence vers quatre utilisateurs, en formant un faisceau vers chaque utilisateur afin de supprimer l'interférence entre utilisateurs,
- la figure 4, citée en relation avec l'art antérieur, dans un contexte de transmission SDMA, est un schéma illustrant un premier mode de réalisation d'un procédé de transmission selon lequel le point d'accès émet une trame de sondage « sounding » selon une transmission omnidirectionnelle pour les premiers champs L-STF, L-LTF, L-SIG et VHTSIGA puis selon une transmission directionnelle pour les champs suivants en particulier VHT-LTFi contenant les pilotes,
- la figure 5, citée en relation avec l'art antérieur dans un contexte identique à celui de la figure 3, est un schéma illustrant l'interférence subie par un récepteur/utilisateur destinataire causée par l'information destinée aux autres récepteurs/utilisateurs destinataires,
- la figure 6, citée en relation avec l'art antérieur, dans un contexte de transmission SDMA, est un schéma illustrant un deuxième mode de réalisation d'un procédé de transmission selon lequel le point d'accès émet une trame de sondage « sounding » selon une transmission omnidirectionnelle pour les premiers champs L-STF, L-LTF, L-SIG et VHTSIGA puis selon une

transmission directionnelle pour les champs suivants en particulier VHT-LTFi contenant les pilotes,
- la figure 7 est un organigramme des principales étapes du procédé de transmission selon l'invention,
- la figure 8 est un schéma d'un exemple de structure simplifiée d'une station apte à transmettre des paquets de données, selon un objet de l'invention.

### Description d'un mode de réalisation de l'invention

L'invention est décrite dans le contexte du standard IEEE 802.11ac tel qu'il est décrit en particulier dans le document IEEE802.11-11/0040r0. Selon ce document, une trame « MAC VHT control field » permet de remonter des informations notamment pour l'adaptation de lien.

| B0 | B1 | B2 | B3-B5 | B6-B8 | B9-B11 | B12-B15 | B16-B23 |
|---|---|---|---|---|---|---|---|
| HT/VHT | Solicited/ Unsolicited | MRQ | MSI | MFSI/ GID-L | Nsts | MCS | SNR |

| B24-B26 | B27 | B28 | B29 | B30 | B31 |
|---|---|---|---|---|---|
| GID-H | Coding type | FB TX Type | Reserved | AC Constraint | RDG/More PPDU |

Le champ MFB permet de faire de l'adaptation de lien en mode MU-MIMO. Dans ce mode, la station peut proposer à l'émetteur d'adapter sa transmission (débit, ...) compte tenu de sa connaissance du canal de propagation, des performances de son récepteur et des transmissions passées. Le champ Nsts défini le nombre de flux spatiaux demandé par la station au point d'accès/émetteur. Le champ MCS défini la modulation et le rendement de code demandé par la station au point d'accès/émetteur. Le champ SNR défini le rapport signal à bruit estimé au niveau du récepteur.

Cette trame « VHT control field » peut être incluse dans différentes transmissions et notamment dans les trames d'acquittements.

L'exemple décrit s'appuie sur un système tel qu'illustré par la figure 5. Le système MU-MIMO comprend un point d'accès à plusieurs antennes et plusieurs récepteurs/utilisateurs. Le déroulement du procédé 1 est illustré par l'organigramme de la figure 7. Le procédé comprend :
- une étape 2 de construction d'une trame de sondage dont une première partie comprend au moins un symbole destiné à la synchronisation de récepteurs destinataires et une deuxième partie comprend au moins autant de symboles pilote pré codés que de récepteurs destinataires,
- une étape 3 d'émission de la trame de sondage selon un mode de diffusion pour la première partie et selon un mode directionnel pour la seconde partie à destination des récepteurs destinataires,
- une étape 4 de construction d'une trame de données à destination des récepteurs destinataires.

L'étape 4 de construction de la trame de données prend en compte une information de retour fbck venant des récepteurs destinataires codant pour un récepteur destinataire une interférence inter récepteurs destinataires. Typiquement, l'interférence codée permet d'identifier un récepteur destinataire interférant qui génère le niveau d'interférence le plus élevé. L'interférence codée peut coder le niveau d'interférences subies par le récepteur destinataire.

Selon un premier mode de réalisation, l'identifiant du récepteur destinataire interférant est inclus dans un nouveau champ « Interfer » signalant que la mauvaise détection par le récepteur destinataire est due à un utilisateur/récepteur destinataire interférant (bit Interf=1) Le bit « Interf » est mis à « 0 » en cas de bonne réception ou en cas de mauvaise réception dont l'origine n'est pas une interférence due à un autre récepteur destinataire. Un autre nouveau champ « indice utilisateur interférent » permet d'identifier l'utilisateur destinataire qui a causé l'interférence. Compte tenu que les groupes d'utilisateurs peuvent avoir quatre utilisateurs maximum et que le classement de ces utilisateurs dans le groupe est connu, deux bits suffisent à identifier l'utilisateur. Par exemple, 00 : utilisateur 1,01 : utilisateur 2, ...La composition de la trame « VHT control field » est alors la suivante :

| B0 | B1 | B2 | B3-B5 | B6-B8 | B9-B11 | B12-B15 | B16-B23 |
|---|---|---|---|---|---|---|---|
| HT/VHT | Solicited/ Unsolicited | MRQ | MSI | MFSI/ GID-L | Nsts | MCS | SNR |

| B24-B26 | B27 | B28 | B29 | B30 | B31 | B32 | B33-B34 |
|---|---|---|---|---|---|---|---|
| GID-H | Coding type | FB TX Type | Reserved | AC Constraint | RDG/More PPDU | Interf | Indice utilisateur interférent |

Selon un deuxième mode de réalisation, aucun champ n'est rajouté à la trame « VHT control field » pour la remontée d'information. Le champ MCS comprend quatre bits qui permettent seize combinaisons. Or seules dix combinaisons sont identifiées dans le standard IEEE 802.11ac telles que décrites dans le document 1361r3. Quatre combinaisons sont donc libres. Ces quatre combinaisons permettent de coder le récepteur destinataire interférant de la même manière que pour le premier mode.

Ce deuxième mode ne nécessite pas de remontée de bit « Interf » puisque l'utilisation d'une des quatre combinaisons contient implicitement l'information comme quoi la réception par le récepteur destinataire est très perturbée par des interférences inter utilisateurs.

La figure 8 est un schéma d'un exemple de structure simplifiée d'une station apte à transmettre des trames, selon un objet de l'invention.

La station est en particulier destinée à un système MIMO multi utilisateurs comprenant un émetteur avec plusieurs antennes TX/RX et des récepteurs associés respectivement aux utilisateurs. La station joue le rôle d'émetteur et peut en outre avoir une fonction de point d'accès WiFi vers un réseau de télécommunication.

La station STA comprend :
- un moyen pour construire une trame de sondage dont une première partie comprend au moins un symbole destiné à la synchronisation de récepteurs destinataires et une deuxième partie comprend au moins autant de symboles pilote pré codés que de récepteurs destinataires. Ce moyen est typiquement un moyen de calcul DSP, par exemple un microprocesseur ou un DSP (Digital Signal Processeur), micro programmé pour calculer les symboles pilotes pré codés avec les vecteurs de pré codage respectifs des récepteurs destinataires.
- un moyen pour construire une trame de données à destination des récepteurs destinataires, les moyens de construction de la trame de données prenant en compte une information de retour venant des récepteurs destinataires codant pour un récepteur destinataire une interférence inter récepteurs destinataires et un identifiant du récepteur destinataire interférant. Selon le mode de réalisation illustré, ce moyen se confond avec le moyen pour construire une trame de sondage, par contre la micro programmation du processeur de signal DSP comprend des modules adaptés pour construire respectivement la trame de sondage et la trame de données.
- des moyens E/R d'émission/réception pour émettre et recevoir des trames via le canal de transmission. Ces moyens sont une chaîne d'émission/réception classique adaptée pour émettre la trame de sondage selon un mode de diffusion pour la première partie et selon un mode directionnel pour la seconde partie à destination des récepteurs destinataires. Ces moyens E/R d'émission/réception sont reliés avec les moyens de construction de la trame de sondage et avec les moyens de construction d'une trame de données.

[1] D. Gesbert, M. Kountouris, R.W. Heath, C.B. Chae, T. Sälzer, "Shifting the MIMO paradigm", IEEE Proc. Mag. Sept. 2007

## Revendications

1. Procédé (1) de transmission de trames destiné à être mis en oeuvre par un système MIMO multi utilisateurs comprenant un émetteur avec plusieurs antennes et des récepteurs associés respectivement aux utilisateurs, comprenant :
- une étape (2) de construction d'une trame de sondage dont une première partie comprend au moins un symbole destiné à la synchronisation de récepteurs destinataires et une deuxième partie comprend au moins autant de symboles pilote pré codés que de récepteurs destinataires,
- une étape (3) d'émission de la trame de sondage selon un mode de diffusion pour la première partie et selon un mode directionnel pour la seconde partie à destination des récepteurs destinataires,
- une étape (4) de construction d'une trame de données à destination des récepteurs destinataires,
**caractérisé en ce que** l'étape (4) de construction de la trame de données prend en compte une information de retour (fbck) venant des récepteurs destinataires codant pour un récepteur destinataire une interférence inter récepteurs destinataires et
**en ce que**, pour un récepteur destinataire donné, l'information de retour code uniquement un identifiant du récepteur destinataire interférant générant l'interférence inter récepteurs destinataires la plus élevée parmi les différentes interférences inter récepteurs destinataires reçues par le récepteur destinataire donné.

2. Procédé (1) de transmission de trames destiné à être mis en oeuvre par un système MIMO multi utilisateurs comprenant un émetteur avec plusieurs antennes et des récepteurs associés respectivement aux utilisateurs selon la revendication 1, dans lequel les données d'un premier et d'un deuxième récepteurs destinataires sont réparties dans des trames de données différentes si l'interférence subie par l'un des récepteurs destinataires due à l'autre récepteur destinataire dépasse un seuil donné.

3. Procédé (1) de transmission de trames destiné à être mis en oeuvre par un système MIMO multi utilisateurs comprenant un émetteur avec plusieurs antennes et des récepteurs associés respectivement aux utilisateurs selon la revendication 1, dans lequel une interférence inter récepteurs destinataires qui dépasse un seuil donné déclenche une étape d'émission d'une trame de sondage.

4. Procédé (1) de transmission de trames destiné à être mis en oeuvre par un système MIMO multi utilisateurs comprenant un émetteur avec plusieurs antennes et des récepteurs associés respectivement aux utilisateurs selon la revendication 1, dans lequel l'information de retour est extraite d'une trame d'acquittement de données provenant d'un récepteur destinataire des données.

5. Procédé (1) de transmission de trames destiné à être mis en oeuvre par un système MIMO multi utilisateurs comprenant un émetteur avec plusieurs antennes et des récepteurs associés respectivement aux utilisateurs selon la revendication précédente, dans lequel l'information de retour est extraite d'un champ qui code avec les mêmes bits un mode de modulation et de codage du récepteur destinataire.

6. Procédé (1) de transmission de trames destiné à être mis en oeuvre par un système MIMO multi utilisateurs comprenant un émetteur avec plusieurs antennes et des récepteurs associés respectivement aux utilisateurs selon la revendication 1, dans lequel les symboles pilote pré codés sont répartis successivement dans la deuxième partie de la trame.

7. Equipement de communication sans fil (STA) avec plusieurs antennes destiné à un système MiMO multi utilisateurs comprenant l'équipement et des récepteurs associés respectivement aux utilisateurs, **caractérisé en ce qu'**il comprend :
- un moyen (DSP) pour construire une trame de sondage dont une première partie comprend au moins un symbole destiné à la synchronisation de récepteurs destinataires et une deuxième partie comprend au moins autant de symboles pilote pré codés que de récepteurs destinataires,
- un moyen (DSP) pour construire une trame de données à destination des récepteurs destinataires, les moyens de construction de la trame de données prenant en compte une information de retour venant des récepteurs destinataires codant uniquement pour un récepteur destinataire donné un identifiant d'un récepteur destinataire interférant générant une interférence inter récepteurs destinataires la plus élevée parmi les différentes interférences inter récepteurs destinataires reçues par le récepteur destinataire donné,
- des moyens d'émission/réception (E/R) pour émettre et recevoir via un canal de transmission des trames, adaptés pour émettre la trame de sondage selon un mode de diffusion pour la première partie et selon un mode directionnel pour la seconde partie à destination des récepteurs destinataires.

8. Programme d'ordinateur sur un support d'informations, ledit programme comportant des instructions de programme adaptées à la mise en oeuvre d'un procédé de transmission de trames mis en oeuvre par un équipement de communication sans fil destiné à un système MiMO multi utilisateurs comprenant l'équipement et des récepteurs associés respectivement aux utilisateurs, selon l'une quelconque des revendications 1 à 6, lorsque ledit programme est chargé et exécuté dans l'équipement de communication sans fil destiné à mettre en oeuvre le procédé de transmission.

9. Support d'informations comportant des instructions de programme adaptées à la mise en oeuvre d'un procédé de transmission de trames mis en oeuvre par un équipement de communication sans fil destiné à un système MiMO multi utilisateurs comprenant l'équipement et des récepteurs associés respectivement aux utilisateurs, selon l'une quelconque des revendications 1 à 6, lorsque ledit programme est chargé et exécuté dans l'équipement de communication sans fil destiné à mettre en oeuvre le procédé de transmission.

## Patentansprüche

1. Verfahren (1) zur Übertragung von Rahmen, welches von einem MIMO-Mehrbenutzersystem durchzuführen ist, das einen Sender mit mehreren Antennen und jeweils den Benutzern zugeordnete Empfänger umfasst, umfassend:
- einen Schritt (2) zur Konstruktion eines Peilungsrahmens, dessen erster Teil mindestens ein Symbol zur Synchronisation von Zielempfängern umfasst und dessen zweiter Teil mindestens ebenso viele vorcodierte Pilotsymbole wie Zielempfänger umfasst,
- einen Schritt (3) zur Sendung des Peilungsrahmens gemäß einem Diffusionsmodus für den ersten Teil und gemäß einem direktionalen Modus für den zweiten Teil in Richtung der Zielempfänger,
- einen Schritt (4) zur Konstruktion eines Datenrahmens in Richtung der Zielempfänger,
**dadurch gekennzeichnet, dass** Schritt (4) zur Konstruktion des Datenrahmens eine von den Zielempfängern stammende Rückkopplungsinformation (fbck) berücksichtigt, die für einen Zielempfänger eine Interferenz zwischen Zielempfängern codiert, und
dass, für einen gegebenen Zielempfänger, die Rückkopplungsinformation nur einen Identifikator des interferierenden Zielempfängers codiert, der die höchste Interferenz zwischen Zielempfängern unter den verschiedenen Interferenzen zwischen Zielempfängern generiert, die von dem gegebenen Zielempfänger empfangen werden.

2. Verfahren (1) zur Übertragung von Rahmen, welches von einem MIMO-Mehrbenutzersystem durchzuführen ist, das einen Sender mit mehreren Antennen und jeweils den Benutzern zugeordnete Empfänger umfasst, nach Anspruch 1, wobei die Daten eines ersten und eines zweiten Zielempfängers in verschiedenen Datenrahmen aufgeteilt werden, wenn die Interferenz, der einer der Zielempfänger aufgrund eines anderen Zielempfängers unterworfen wird, eine gegebene Schwelle überschreitet.

3. Verfahren (1) zur Übertragung von Rahmen, welches von einem MIMO-Mehrbenutzersystem durchzuführen ist, das einen Sender mit mehreren Antennen und jeweils den Benutzern zugeordnete Empfänger umfasst, nach Anspruch 1, wobei eine Interferenz zwischen Zielempfängern, die eine gegebene Schwelle überschreitet, einen Schritt zur Sendung eines Peilungsrahmens auslöst.

4. Verfahren (1) zur Übertragung von Rahmen, welches von einem MIMO-Mehrbenutzersystem durchzuführen ist, das einen Sender mit mehreren Antennen und jeweils den Benutzern zugeordnete Empfänger umfasst, nach Anspruch 1, wobei die Rückkopplungsinformation aus einem Datenquittungsrahmen extrahiert wird, der von einem Zielempfänger der Daten stammt.

5. Verfahren (1) zur Übertragung von Rahmen, welches von einem MIMO-Mehrbenutzersystem durchzuführen ist, das einen Sender mit mehreren Antennen und jeweils den Benutzern zugeordnete Empfänger umfasst, nach dem vorhergehenden Anspruch, wobei die Rückkopplungsinformation aus einem Feld extrahiert wird, das mit denselben Bits einen Modulations- und Codierungsmodus des Zielempfängers codiert.

6. Verfahren (1) zur Übertragung von Rahmen, welches von einem MIMO-Mehrbenutzersystem durchzuführen ist, das einen Sender mit mehreren Antennen und jeweils den Benutzern zugeordnete Empfänger umfasst, nach Anspruch 1, wobei die vorcodierten Pilotsymbole aufeinanderfolgend in dem zweiten Teil des Rahmens verteilt werden.

7. Drahtlose Kommunikationsvorrichtung (STA) mit mehreren Antennen für ein MIMO-Mehrbenutzersystem, das die Vorrichtung und jeweils den Benutzern zugeordnete Empfänger umfasst,
**dadurch gekennzeichnet, dass** diese umfasst:
- ein Mittel (DSP) zur Konstruktion eines Peilungsrahmens, dessen erster Teil mindestens ein Symbol zur Synchronisation von Zielempfängern umfasst und dessen zweiter Teil mindestens ebenso viele vorcodierte Pilotsymbole wie Zielempfänger umfasst,
- ein Mittel (DSP) zur Konstruktion eines Datenrahmens in Richtung der Zielempfänger, wobei die Mittel zur Konstruktion des Datenrahmens eine von den Zielempfängern stammende Rückkopplungsinformation berücksichtigen, die nur für einen gegebenen Zielempfänger einen Identifikator eines interferierenden Zielempfängers codiert, der die höchste Interferenz zwischen Zielempfängern unter den verschiedenen Interferenzen zwischen Zielempfängern generiert, die von dem gegebenen Zielempfänger empfangen werden,
- Mittel zur Sendung/zum Empfang (E/R), um über einen Rahmenübertragungskanal zu senden und zu empfangen, die geeignet sind, den Peilungsrahmen gemäß einem Diffusionsmodus für den ersten Teil und gemäß einem direktionalen Modus für den zweiten Teil in Richtung der Zielempfänger zu senden.

8. Rechnerprogramm auf einem Informationsträger, wobei das Programm Programminstruktionen umfasst, die geeignet sind, von einem Rahmenübertragungsverfahren durchgeführt zu werden, das von einer drahtlosen Kommunikationsvorrichtung durchgeführt wird, für ein MIMO-Mehrbenutzersystem, das die Vorrichtung und jeweils den Benutzern zugeordnete Empfänger umfasst, nach einem der Ansprüche 1 bis 6, wenn das Programm in der drahtlosen Kommunikationsvorrichtung geladen und ausgeführt wird, um das Übertragungsverfahren durchzuführen.

9. Informationsträger, der Programminstruktionen umfasst, die geeignet sind, von einem Rahmenübertragungsverfahren durchgeführt zu werden, das von einer drahtlosen Kommunikationsvorrichtung durchgeführt wird, für ein MIMO-Mehrbenutzersystem, das die Vorrichtung und jeweils den Benutzern zugeordnete Empfänger umfasst, nach einem der Ansprüche 1 bis 6, wenn das Programm in der drahtlosen Kommunikationsvorrichtung geladen und ausgeführt wird, um das Übertragungsverfahren durchzuführen.

## Claims

1. Method (1) for transmitting frames which is intended to be implemented by a multiuser MIMO system comprising a sender with several antennas and receivers associated respectively with the users, comprising:
- a step (2) of constructing a probe frame of which a first part comprises at least one symbol intended for the synchronization of destination receivers and a second part comprises at least as many pre-coded pilot symbols as destination receivers,
- a step (3) of sending the probe frame according to a broadcasting mode for the first part and according to a directional mode for the second part destined for the destination receivers,
- a step (4) of constructing a data frame destined for the destination receivers,
**characterized in that** the step (4) of constructing the data frame takes into account an item of feedback information (fbck) coming from the destination receivers coding for a destination receiver an interference between destination receivers and
**in that**, for a given destination receiver, the item of feedback information codes solely an identifier of the interfering destination receiver generating the highest interference between destination receivers among the various interferences between destination receivers that are received by the given destination receiver.

2. Method (1) for transmitting frames which is intended to be implemented by a multiuser MIMO system comprising a sender with several antennas and receivers associated respectively with the users according to Claim 1, in which the data of a first and of a second destination receivers are distributed in different data frames if the interference experienced by one of the destination receivers due to the other destination receiver exceeds a given threshold.

3. Method (1) for transmitting frames which is intended to be implemented by a multiuser MIMO system comprising a sender with several antennas and receivers associated respectively with the users according to Claim 1, in which an interference between destination receivers which exceeds a given threshold triggers a step of sending a probe frame.

4. Method (1) for transmitting frames which is intended to be implemented by a multiuser MIMO system comprising a sender with several antennas and receivers associated respectively with the users according to Claim 1, in which the item of feedback information is extracted from a data acknowledgement frame originating from a destination receiver of the data.

5. Method (1) for transmitting frames which is intended to be implemented by a multiuser MIMO system comprising a sender with several antennas and receivers associated respectively with the users according to the preceding claim, in which the item of feedback information is extracted from a field which codes with the same bits a mode of modulation and of coding of the destination receiver.

6. Method (1) for transmitting frames which is intended to be implemented by a multiuser MIMO system comprising a sender with several antennas and receivers associated respectively with the users according to Claim 1, in which the pre-coded pilot symbols are distributed successively in the second part of the frame.

7. Wireless communication unit (STA) with several antennas which is intended for a multiuser MIMO system comprising the unit and receivers associated respectively with the users, **characterized in that** it comprises:
- a means (DSP) for constructing a probe frame of which a first part comprises at least one symbol intended for the synchronization of destination receivers and a second part comprises at least as many pre-coded pilot symbols as destination receivers,
- a means (DSP) for constructing a data frame destined for the destination receivers, the means for constructing the data frame taking into account an item of feedback information coming from the destination receivers coding solely for a given destination receiver an identifier of an interfering destination receiver generating the highest interference between destination receivers among the various interferences between destination receivers that are received by the given destination receiver,
- sending/receiving means (E/R) for sending and receiving via a frames transmission channel, which means are adapted for sending the probe frame according to a broadcasting mode for the first part and according to a directional mode for the second part destined for the destination receivers.

8. Computer program on an information medium, said program comprising program instructions suitable for the implementation of a method for transmitting frames which is implemented by a wireless communication unit intended for a multiuser MIMO system comprising the unit and receivers associated respectively with the users, according to any one of Claims 1 to 6, when said program is loaded and executed in the wireless communication unit intended to implement the transmission method.

9. Information medium comprising program instructions suitable for the implementation of a method for transmitting frames which is implemented by a wireless communication unit intended for a multiuser MIMO system comprising the unit and receivers associated respectively with the users, according to any one of Claims 1 to 6, when said program is loaded and executed in the wireless communication unit intended to implement the transmission method.
